Europäisches Patentamt

European Patent Office

Office européen des brevets

(19)

(11) Veröffentlichungsnummer : **0 144 585**
**B1**

(12) **EUROPÄISCHE PATENTSCHRIFT**

(45) Veröffentlichungstag der Patentschrift :
07.03.90

(21) Anmeldenummer : 84111585.0

(22) Anmeldetag : 28.09.84

(51) Int. Cl.⁵ : **G 05 B 19/405**

(54) Verfahren zur perspektivischen Darstellung von veränderbaren Gebilden.

(30) Priorität : 26.10.83 DE 3338765

(43) Veröffentlichungstag der Anmeldung :
19.06.85 Patentblatt 85/25

(45) Bekanntmachung .des Hinweises auf die Patenterteilung : 07.03.90 Patentblatt 90/10

(84) Benannte Vertragsstaaten :
AT CH DE FR GB IT LI NL SE

(56) Entgegenhaltungen :
EP--A-- 0 089 561
EP--A-- 0 136 404

(73) Patentinhaber : **Dr. Johannes Heidenhain GmbH**
**Nansenstrasse 17**
**D-8225 Traunreut (DE)**

(72) Erfinder : **Kranitzky, Walter, Dr.**
**Schierghoferstrasse 20**
**D-8220 Traunstein (DE)**

Jouve, 18, rue St-Denis, 75001 Paris, France

## Beschreibung

Die Erfindung bezieht sich auf ein Verfahren gemäß dem Oberbegriff des Anspruches 1.

Eine perspektivische Bildschirm-Darstellung von beliebig geformten Körpern, wie sie bei sogenannten CAD-Systemen heute üblich ist, läßt sich bis jetzt in numerisch gesteuerten Werkzeugmaschinen bzw. Programmierplätzen nicht mit vertretbarem Aufwand realisieren. Im allgemeinen beschränkt man sich hier auf die zweidimensionale Darstellung verschiedener Ansichten des Werkstücks.

Als jüngste Veröffentlichungen seien hier beispielsweise die EP-A2-0 089 561 und EP-A2-0 089 562 genannt.

Dreidimensionale Abbildungen des Werkstückes als « durchsichtiges » Drahtmodell, wie sie z. B. die Steuerung Mazatrol T-1 der Firma Yamazaki bietet, werden sehr schnell unübersichtlich, da Bearbeitungsvorgänge nur durch die Anzeige der Werkzeugmittelpunktbahn dargestellt werden.

Die dem Stand der Technik entsprechenden Darstellungsarten sind unbefriedigend, vor allem, wenn mit Hilfe der grafischen Darstellung bereits bei der Programmierung der numerischen Steuerung das eingegebene Programm überprüft und gegebenenfalls korrigiert werden soll.

Der Erfindung liegt die Aufgabe zugrunde, die grafische Darstellung an Bildschirmen zu verbessern, und zu ermöglichen- ohne den bisher notwendigen rechnerischen und apparativen Aufwand-, dreidimensionale Gebilde in Parallelprojektion räumlich am Bildschirm darzustellen, wobei durch im Vordergrund liegend Bildteile verdeckte Kanten- und Flächenstücke unsichtbar bleiben.

Diese Aufgabe wird durch ein Verfahren gelöst, dessen Verfahrensschritte im Kennzeichen des Anspruchs 1 angegeben sind.

Die besonderen Vorteile liegen bei dem erfindungsgemäßen Verfahren darin, daß die Abbildung von beliebig komplizierten Werkstücken durch die Eingabe der zu Ihrer Herstellung nötigen Werkzeugbewegungen erzeugt wird. Somit kann man die Wirkung jedes Bearbeitungsschrittes auf das Werkstück direkt am Bildschirm verfolgen.

Die für das Verfahren nötigen Berechnungen lassen sich mit allen gängigen Mikroprozessoren durchführen. Der Speicherbedarf ist abhängig von Größe und Form des Werkstückes. Zur Durchführung des Verfahrens für die 3D-Darstellung werden jedoch lediglich 1K-Byte an Speicherplatz benötigt, so daß eine Anwendung des Verfahrens auch in kleinen Mikroprozessorsystemen in Frage· kommt. Die drastische Verringerung des für 3D-Darstellungen notwendigen Aufwands wird durch konsequentes Ersetzen von komplizierten stereometrischen Berechnungen durch einfache Ein-Bit-Operation möglich. An Stelle numerischer Schnittpunktberechnungen wird dazu direkt die im Bildpunkt-Speicher stehende Information ausgewertet.

Anhand der Zeichnungen soll mit Hilfe eines Ausführungsbeispieles das Verfahren noch näher erläutert werden.

Es zeigen

Figur 1 ein Werkstück mit angedeuteten Schnittebenen ;

Figur 2 einen teilweise dargestellten Schaftfräser mit angedeuteten Schnittebenen ;

Figur 3a bis e Überlagerungen verschiedener Schnitte von Werkstück und Schaftfräser ;

Figur 4a bis c Überlagerungen verschiedener Schnitte des veränderten Werkstückes im Bildpunkt-Speicher ;

Figur 5a bis c Darstellung des bearbeiteten Werkstückes in verschiedenen Stadien anhand resultierender Außenkonturen ;

Figur 6 ein Flußdiagramm eines Algorithmus zur Konturenermittlung ;

Figur 7 eine Prinzipskizze zur Ermittlung einer Außenkontur bei zwei schräg zueinander versetzten Schnittebenen ;

Figur 8 eine Prinzipskizze zur Ermittlung einer Innenkontur bei zwei schräg zueinander versetzten Schnittebenen ;

Figur 9 ein Blockschaltbild.

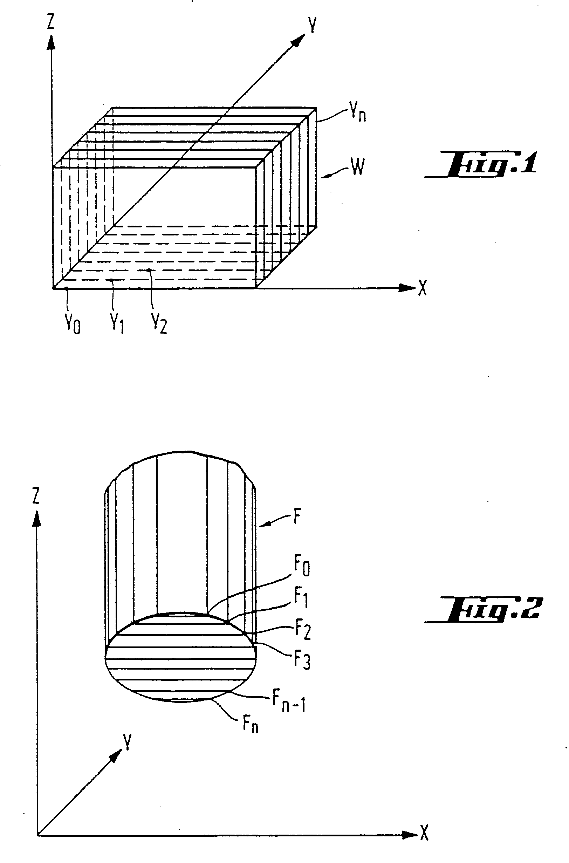

Ein dreidimensionales kartesisches Koordinatensystem ist gemäß Figur 1 wie folgt vereinbart :

Die vorne links unten gelegene Ecke eines Werkstückes W bildet den Koordinatenursprung X- und Z-Achse weisen in der Bildebene nach rechts bzw. oben. Die Y-Achse weist nach hinten in den Bildraum hinein. Jedes Werkstück W wird intern in Form der Eckenkoordinaten von senkrecht zur Y-Achse angeordneten Schnitten $Y_o$ bis $Y_n$ gespeichert. Der Abstand zwischen den einzelnen Schnittebenen ist konstant. Die Anzahl der Schnitte $Y_o$ bis $Y_n$ hängt ab von der Größe des Werkstücks W und der maximalen Auflösung des zur Verfügung stehenden Grafikteils.

Die Darstellung eines Schnittes $Y_i$ erfolgt durch die X- und Z-Koordinate eines Ursprungseckpunktes und durch X- und Z-Vektoren der weiteren Eckpunkte relativ zum jeweils vorhergehender Punkt.

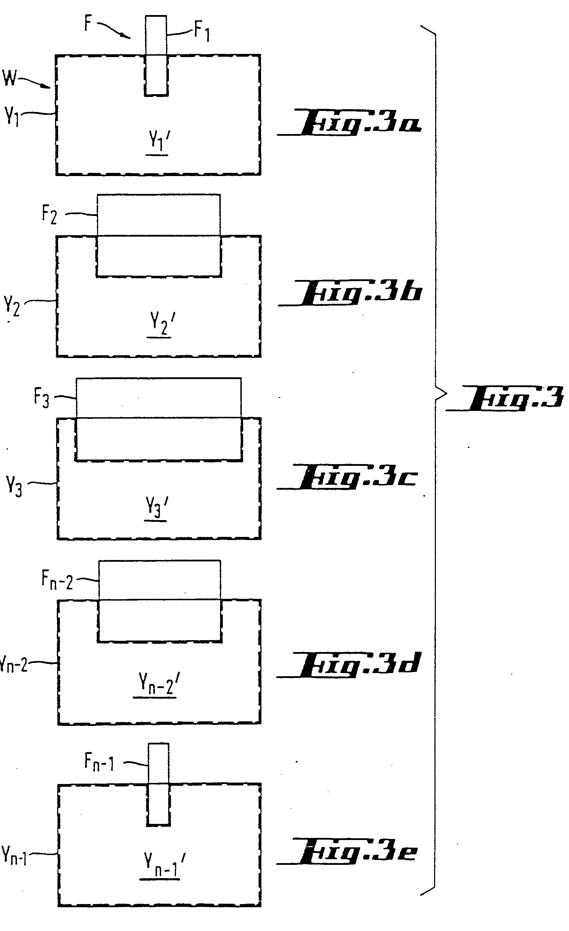

Im gleichen Koordinatensystem lassen sich gemäß Figur 2 Koordinaten von Schnitten $F_o$ bis $F_n$ eines Werkzeuges F errechnen. Das Werkzeug, z. B. ein Schaftfräser F, läßt sich ebenfalls durch Schnitte $F_o$ bis $F_n$ darstellen. Zur Ermittlung ihrer Koordinaten ist, mit dem Fräserradius als Parameter, pro Schnitt $F_i$ einmal eine Sinusfunktion zu berechnen. Man ist selbstverständlich nicht auf Schaftfräser beschränkt. Es lassen sich auch die Schnitte von Formfräsern einspeichern.

Die Koordinatenwerte der Werkstückschnitte $Y_o$ bis $Y_n$ werden in einem Schnittspeicher M abgespeichert, der als RAM ausgeführt sein kann.

Die Koordinaten der Schnitte $F_o$ bis $F_n$ des Werkzeuges F können ebenfalls in einem RAM abgespeichert werden, der als Schnittspeicher M' eingesetzt ist.

In Figur 3 ist die Überlagerung der Schnitte Y1 bis Yn-1 des Werkstückes W mit den Schnitten F1 bis Fn-1 des Schaftfräsers F in verschiedenen Stadien vereinfacht dargestellt. Die Überlagerung findet in einem Bildpunkt-Speicher E1 statt, der sämtliche Bildinformationen in Form von Bildelementen, sogenannten Pixeln enthält, dessen Inhalt jedoch nicht unmittelbar am Bildschirm angezeigt wird.

Die Überlagerung der Schnitte Fi des Fräsers F und der Schnitte Yi des Werkstückes W erfolgt nach den Angaben der numerischen Steuerung, die die Werkzeugbahn oder die Werkstückbahn nach ihrem Programm bestimmt. Diesen Daten entsprechend werden die Überlagerungen der Schnitte Yi und Fi in vorgegebener Weise verändert.

Nachdem die Anfangswerte für Mittelpunkt (X, Y) und Höhe (Z) des Werkzeuges F bekannt sind, beginnt man damit, den vordersten Schnitt des Werkstückes W (Y1), der durch das Werkzeug F verändert wird, in den nicht angezeigten Bildpunkt-Speicher E1 zu schreiben. Danach überträgt man den Schnitt F1 des Werkzeugs F, der dem Y-Wert Y1 entspricht, ebenfalls in den Bildpunkt-Speicher E1, ermittelt die resultierende Werkstückkontur des Bildes und ersetzt die alten Schnittkoordinaten des Werkstücks W durch diejenigen der resultierenden Werkstückkontur Y1'. Dieser Vorgang wird solange wiederholt, bis alle in Frage kommenden Schnitte Yi geändert sind.

Handelt es sich bei dem Bearbeitungsschritt — wie in gezeigtem Beispiel — lediglich um ein senkrechtes Einstechen ohne seitliche Bewegung des Fräsermittelpunktes, so kann man das Werkstück W, wie weiter unten schrieben, zur Anzeige bringen. Im allgemeinen bewegt sich das Werkzeug F oder Werkstück W jedoch auf beliebigen Bahnen im Raum. In diesem Falle muß die Änderung der Schnittkoordinaten für jede Werkzeugposition erneut durchgeführt werden. Zweckmäßigerweise bearbeitet man jeden Schnitt Y = Yn des Werkstücks W nur einmal pro NC-Satz, indem man sämtliche durch den NC-Satz für den Wert Y = Yn definierten Werkzeugschnitte nacheinander in den Bildpunkt-Speicher E1 überträgt und erst zum Schluß die resultierende Werkstückkontur ermittelt, wenn sämtliche Bearbeitungsvorgänge für den betreffenden Schnitt Yi abgeschlossen sind.

Die Schnittkoordinaten der veränderten Werkstückschnitte Yo' bis Yn' werden als neue Schnittkoordinaten im Schnittspeicher M abgespeichert.

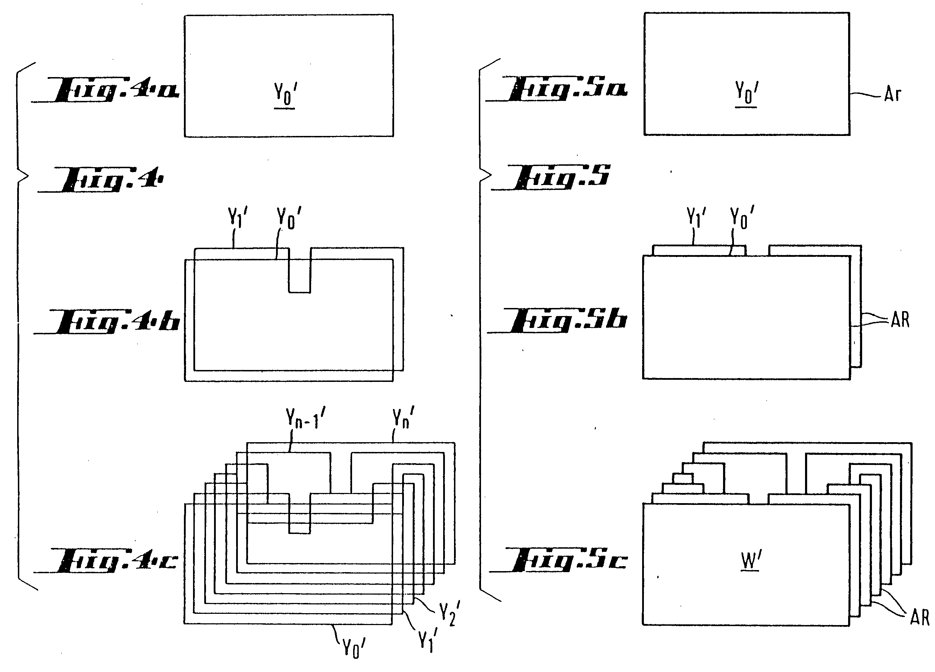

Zum Aufbau eines perspektivischen Bildes des bearbeiteten Werkstückes W' werden die veränderten Schnitte Yo' bis Yn' in den Bildpunkt-Speicher E1 eingeschrieben. Diese Verfahrensschnitte werden in den Figuren 4a bis c und 5a bis c dargestellt.

Zuerst wird gemäß Figur 4a der vorderste Werkstückschnitt Yo' in den Bildpunkt-Speicher E1 eingeschrieben und es wird eine resultierende Außenkontur Ar ermittelt.

Da im gewählten Beispiel der Fräser F den vordersten Schnitt Yo nicht bearbeitet hat, ist die Kontur des « bearbeiteten » Schnittes Yo' dieselbe, wie die ursprüngliche Kontur. Die resultierende Außenkontur Ar wird gemäß Figur 5a am Bildschirm dargestellt.

In der zweiten Schnittebene Y1' ist ein Materialabtrag erfolgt, und die neue Kontur wird aus dem Schnittspeicher M in den Bildpunkt-Speicher E1 eingeschrieben. Dabei wird die neue Kontur des Schnittes Y1' um einige Bildpunkte in X- und Z-Richtung gegenüber dem vordersten Schnitt Yo' versetzt, was in Figur 4b gezeigt ist.

Im Bildpunkt-Speicher E1 wird anhand der nun eingeschriebenen Bild-Informationen die resultierende Außenkontur Ar ermittelt und gemäß Figur 5b zusätzlich am Bildschirm dargestellt.

Im folgenden werden die weiteren Schnitte Y2' bis Yn' nacheinander in der vorbeschriebenen Weise in den Bildpunkt-Speicher E1 eingeschrieben, wo nach jeder Schnitteinspeicherung anhand der Bildinformation die jeweils resultierende Außenkontur Ar ermittelt und dann zur Anzeige gebracht wird.

In Figur 4c ist die letzte Stufe dargestellt, in der bereits alle Schnitte Yo' bis Yn' in den Bildpunkt-Speicher E1 eingespeist sind. Die anhand dieser Bildinformationen ermittelten resultierenden Außenkonturen Ar sind in Figur 5c dargestellt. Diese Darstellung entspricht dem Bild des bearbeiteten Werkstückes W', wie es am Bildschirm der numerischen Steuerung der Bedienungsperson vor Augen geführt wird.

Die durch im Vordergrund liegende Schnitte verdeckten Teile weiter hinten liegender Schnitte werden automatisch nicht in die Anzeige übertragen, da sie innerhalb der bis dahin ermittelten Außenkontur Ar liegen.

Durch Ändern des Versatzes der Schnitte Yo' bis Yn' gegeneinander kann der Betrachtungswinkel variiert werden. So sind Schrägbildansichten von verschiedenen Seiten möglich. Kehrt man die Reihenfolge der Schnittverarbeitung um, so entstehen Bilder der Rückseite des Werkstücks W'. Durch Vertauschen der inkrementalen Koordinatenwerte innerhalb jedes Schnittes (z. B. X = Z ; Z = – X), kann man das Werkstück W' um ±90° gedreht auf der Seite liegend oder auch um 180° gedreht mit der Unterseite nach oben zeigend darstellen. Die Abbildung aufgeschnittener Werkstücke W' ist dadurch möglich, daß man die 3D-Darstellung erst bei einem in der Mitte gelegenen Schnitt beginnt.

Weitere Variationsmöglichkeiten sind mit der Farbgrafik gegeben. So lassen sich Deck- und Seitenflächen auf einfache Weise verschiedenfarbig darstellen. Eine Bemaßung des Werkstücks W' kann durch farbliche Hervorhebung z. B. jedes zehnten Schnittes Y10' verdeutlicht werden.

Schließlich kann man eine Zoom-Funktion einführen, indem man von Anfang an einen vergrößerten Ausschnitt des Werkstückes W in oben beschriebener Weise behandelt.

Es versteht sich, daß anstelle eines Bildschirmes auch eine andere Anzeigevorrichtung (Plotter oder dgl.) vorgesehen sein kann, und daß die numerische Steuerung auch durch einen Programmierplatz oder dgl. ersetzt werden kann.

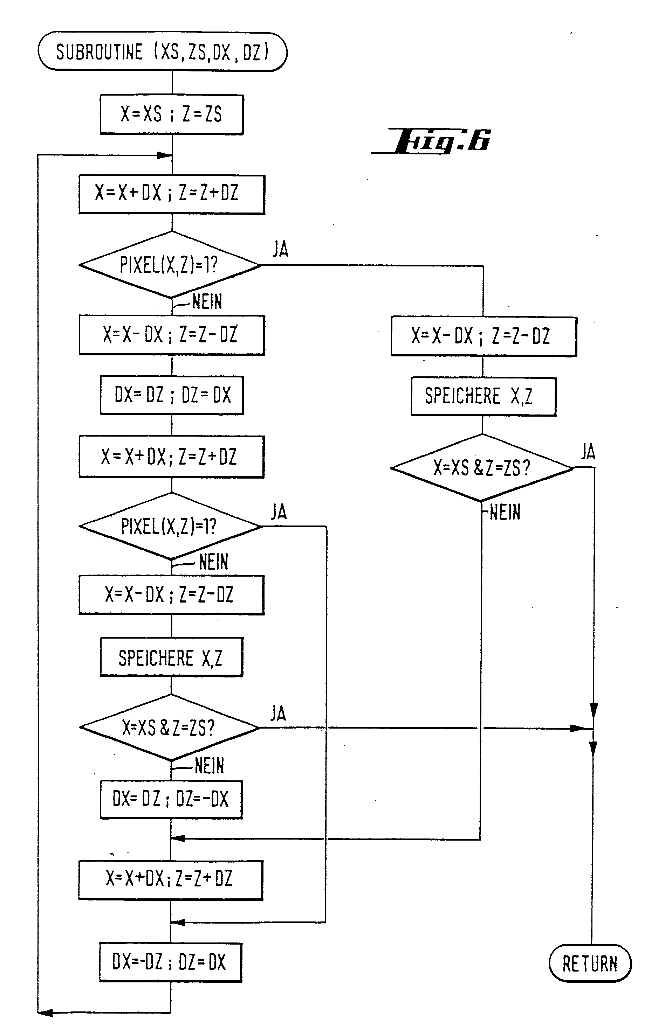

Die vorbeschriebene Ermittlung der resultierenden Werkstückkonturen der veränderten Schnitte Y' und der resultierenden Außenkonturen Ar erfolgt durch einen einfachen Algorithmus, dessen Flußdiagramm in Figur 6 dargestellt ist. Dieser durch das Flußdiagramm für den Fachmann in hinreichender Weise beschriebenen Algorithmus wird zur Aktualisierung der Schnittkoordinaten nach einer Werkzeugbewegung verwendet.

Kennzeichnend für die Einfachheit des Verfahrens ist, daß mit dem Algorithmus lediglich Ein-Bit-Operationen ausgeführt werden müssen.

Da jede beliebig gekrümmte Linie durch eine Treppenlinie angenähert werden kann, sind auch Schnittpunkte von Kreisen, Geraden, Ellipsen etc. auf diese Weise zu ermitteln.

Der Algorithmus gemäß Figur 6 dient dazu, den Polygonzug einer resultierenden Werkstückkontur eines aus beliebig vielen waagerechten und senkrechten Linien aufgebauten Bildes zu ermitteln.

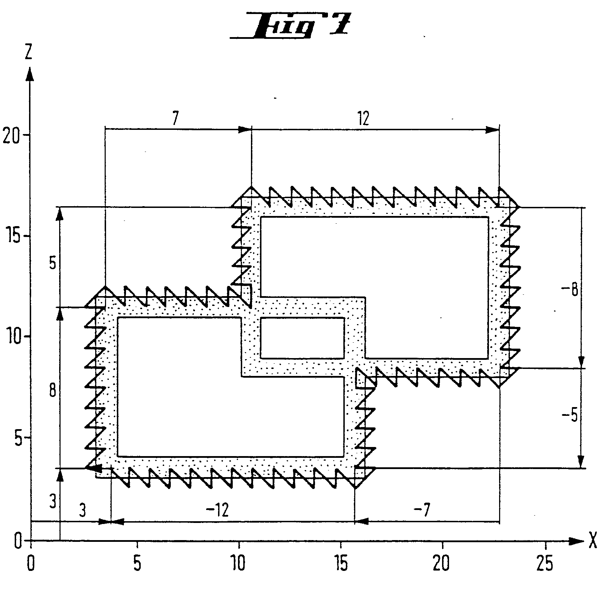

Das in Figur 7 gezeigte Beispiel zur Ermittlung einer Außenkontur ist ein Bild, das aus zwei schräg gegeneinander versetzten Rechtecken gleicher Größe besteht. Dieses Bild kann vom Vektorgenerator eines Grafikteils in eine am Bildschirm nicht angezeigte Ebene eines Bildpunkt-Speichers geschrieben werden. Als Anfangsparameter werden die Koordinatenwerte eines beliebigen Punktes auf der zu ermittelnden Kontur $X_0$, $Z_0$ und die Richtung eines benachbarten Konturpunktes relativ zum Startpunkt benötigt. Im Beispiel ist die linke untere Ecke des Bildes als Startpunkt $X_0 = 3$, $Z_0 = 3$ definiert. Der Nachbarpunkt liegt in positiver Z-Richtung. Mit Hilfe einer Testroutine gemäß dem Algorithmus nach Figur 6 wird nun ermittelt, ob der links vom Startpunkt liegende Bildpunkt $X = 2$, $Z = 3$ gesetzt oder gelöscht ist. Aus dieser Information erhält man dann die Koordinaten des nächsten zu testenden Bildpunktes $X = 3$, $Z = 4$ und so fort. In Figur 7 ist die Folge der Testschritte als sägezahnförmige Linie eingezeichnet. Ein Eckpunkt der Kontur ist dann erreicht, wenn der nach einem Sprung in Richtung rechts oben $\Delta X = 1$, $\Delta Z = 1$ getestete Bildpunkt gelöscht is (Außenecke) oder wenn der nach einem Linkssprung $\Delta X = -1$, $\Delta Z = 0$ getastete Bildpunkt gesetzt ist (Innenecke). Tritt einer der beiden Fälle auf, so werden die Koordinaten des Eckpunktes im Schnittspeicher M abgespeichert, eine Drehung des Koordinatensystems um 90° durchgeführt und die Testroutine solange fortgesetzt, bis der Startpunkt wieder erreicht ist. Wie Figur 7 zeigt, erhält man so die Eckpunktkoordinaten der Außenkontur (3, 3), (3, 11), (10, 11), (10, 16), (22, 16), (22, 8), (15, 8), (15, 3), (3, 3) oder in inkrementaler Form 3, 3, 8, 7, 5, 12, − 8, − 7, − 5, −12, was durch die Anzahl der Inkremente an den Richtungspfeilen dargestellt ist.

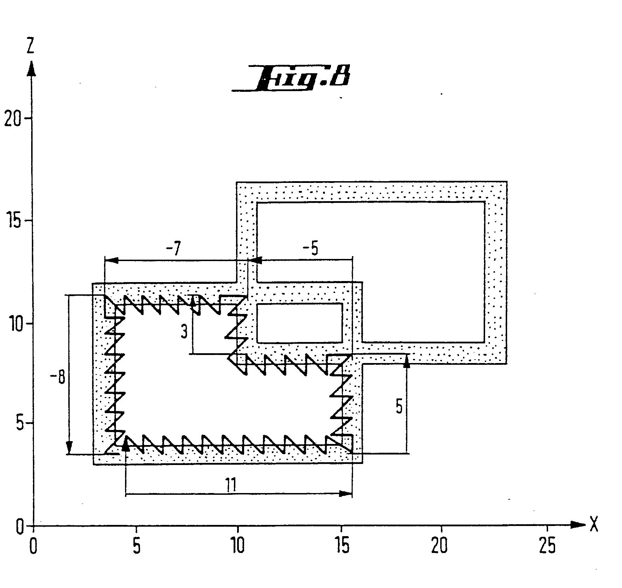

Wählt man als Startpunkt $X_0 = 4$, $Z_0 = 3$ und den Nachbarpunkt in positiver X-Richtung $X = 5$, $Z = 3$, so erhält man mit dem gleichen Algorithmus die Koordinaten der Innenkontur, wie in Figur 8 gezeigt.

Wird auch hier die Darstellung der Koordinaten in inkrementaler Form gewählt (11, 5, − 5, 3, − 7, − 8), so wird eine maximale Speicherplatznutzung, raschester Bildaufbau und Flexibilität in der Wahl des Betrachterstandpunkts gewährleistet.

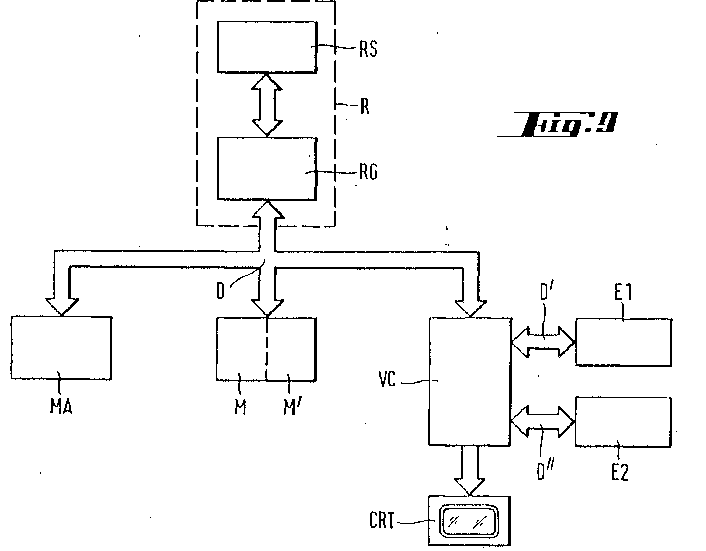

Das in Figur 9 gezeigte Blockschaltbild stellt eine Einrichtung zum Durchführen des erfindungsgemäßen Verfahrens dar. Ein aus Steuerungsrechner RS und Grafikrechner RG bestehender Digitalrechner R ist über Datenleitungen D mit einem Speicher MA für den Konturenalgorithmus verbunden, der als EPROM ausgebildet ist. Über Datenleitungen D ist der Digitalrechner R auch mit dem als RAM ausgebildeten Schnittspeicher M, M' für die Koordinaten der Werkstückschnitte Yo bis Yn und der Werkzeugschnitte Fo bis Fn verbunden.

Weitere Datenleitungen D verbinden einen sogenannten Video-Controller VC mit dem Digitalrechner R.

Der Video-Controller VC ist seinerseits über andere Datenleitungen D' mit einem Bildpunkt-Speicher E1 verbunden, dessen Bildinformationen jedoch nicht angezeigt werden.

Ein zweiter Bildpunkt-Speicher E2 enthält die zur Anzeige vorgesehenen Bildinformationen, die vom Video-Controller VC über Datenleitungen D" aus dem Bildpunkt-Speicher E2 an einen Bildschirm CRT übertragen und dort zur Anzeige gebracht werden.

## Patentansprüche

1. Verfahren zur perspektivischen Darstellung eines veränderbaren, von einem Werkzeug bearbeiteten Werkstückes mit Hilfe von in gleicher Richtung verlaufenden Werkstück- und Werkzeugschnitten, vorzugsweise zur Darstellung auf dem Bildschirm einer Werkzeugmaschinensteuerung, dadurch gekennzeichnet, daß das Werkstück (W) in eine Anzahl von Schnitten ($Y_0$ bis $Y_n$) zerlegt wird, deren Koordinaten in einem Schnittspeicher (M) für die Werkstückschnitte abgespeichert werden, daß das auf das Werkstück (W) einwirkende Werkzeug (F) ebenfalls in Schnitte ($F_0$ bis $F_n$) zerlegt wird, deren Koordinaten in einem Schnittspeicher (M') für die Werkzeugschnitte abgespeichert werden, daß anschließend in einem nicht angezeigten Bildpunktspeicher (E1) die Schnitte ($Y_0$ bis $Y_n$) des Werkstückes (W) und die Schnitte ($F_0$ bis $F_n$) des Werkzeuges (F) entsprechend der ihre Relativbewegungen bestimmenden Daten sukzessive überlagert werden, daß daraus resultierende Werkstückkonturen als neue Schnitte ($Y'_0$ bis $Y'_n$) des veränderten Werkstückes (W') aus den jeweiligen überlagerten Schnitten ($Y_0$, $F_0$ bis $Y_n$, $F_n$) ermittelt und in dem Schnittspeicher (M) für die Werkstückschnitte abgespeichert werden, daß die neuen Schnitte ($Y'_0$ bis $Y'_n$) nacheinander jeweils um einige Bildpunkte in X- und/oder Z-Richtung der jeweiligen Schnittebene zueinander versetzt im Bildpunktspeicher (E1) zum Zwecke der perspektivischen Darstellung überlagert werden, daß schließlich nach jeder Überlagerung der einzelnen neuen Schnitte ($Y_0'$ bis $Y_n'$) eine resultierende Außenkontur (AR) ermittelt wird, wobei nach Maßgabe eines in einem Speicher (MA) abgelegten Konturalgorithmus die Ermittlung der resultierenden Außenkonturen (AR) im nicht angezeigten Bildpunktspeicher (E1) erfolgt, und daß deren Daten in einen als Bildwiederholspeicher fungierenden Bildpunkt-Speicher (E2) übertragen und von dort zur Anzeige gebracht werden.

2. Verfahren nach Anspruch 1, dadurch gekennzeichnet, daß die Abspeicherung der Schnittkoordinaten von Werkstück (W, W') und Werkzeug (F) in inkrementaler Form in einem als RAM ausgebildeten Schnittspeicher (M, M') erfolgt.

3. Verfahren nach Anspruch 1, dadurch gekennzeichnet, daß die Überlagerung der Schnitte (Yo, Fo bis Yn, Fn) von Werkstück (W) und Werkzeug (F) in einem nicht angezeigten Bildpunkt-Speicher (E1) erfolgt, der sämtliche Bildinformationen in Form sogenannter Pixel enthält.

4. Verfahren nach Anspruch 1 und 3, dadurch gekennzeichnet, daß die Daten, die zur Überlagerung der Schnitte (Yo, Fo bis Yn, Fn) von Werkstück (W) und Werkzeug (F) führen, von einem Digitalrechner geliefert werden.

5. Verfahren nach Anspruch 1, dadurch gekennzeichnet, daß die resultierenden Werkstückkonturen (Ar) durch einen einfachen Algorithmus ermittelt werden, der dazu direkt die im Bildpunkt-Speicher (E1) stehenden Bildinformationeauswertet.

6. Verfahren nach Anspruch 1, dadurch gekennzeichnet, daß auch schräge Werkstückkonturen dargestellt werden können.

## Claims

1. Method for the perspective representation of a variable workpiece workable by a tool, with the aid of workpiece and tool sections running in the same direction, preferably for representation on the screen of a machine tool control, characterized in that the workpiece (W) is decomposed into a number of sections ($Y_0$ to $Y_n$), whose coordinates are stored in a section store (M) for the workpiece sections, in that the tool (F) acting on the workpiece (W) is likewise decomposed into sections ($F_0$ to $F_n$) whose coordinates are stored in a section store (M') for the workpiece sections, in that the sections ($Y_0$ to $Y_n$) of the workpiece (W) and the sections ($F_0$ to $F_n$) of the tool (F) are then successively overlaid in correspondence with data determining their relative movements, in that workpiece contours resulting therefrom are generated as new sections ($Y_0'$ to $Y_n'$) of the modified workpiece (W') from the current overlaid sections ($Y_0$, $F_0$ to $Y_n$, $F_n$) and stored in the section store (M) for the workpiece sections, in that the new sections ($Y_0'$ to $Y_n'$) are sequentially overlaid each mutually displaced by some picture points in the X and/or Z direction of the respective section plane in the image point store (E1) for the purposes of the perspective representation, in that a resultant outer contour (AR) is then generated after each overlaying of the individual new sections ($Y_0'$ to $Y_n'$), wherein the generation of the resultant outer contour (AR) takes place according to a contour algorithm held in a store (MA) into the non-displayed image point store (E1), and in that the data thereof is transferred into an image point store (E2) functioning as image refresh store and thence displayed.

2. Method according to claim 1, characterized in that the storage of the section coordinates of the workpiece (W, W') and tool (F) is effected in incremental form in a section store (M, M') formed as RAM.

3. Method according to claim 1, characterized in that the overlaying of the sections ($Y_0$, $F_0$ to $Y_n$, $F_n$) of the workpiece (W) and tool (F) takes place in a non-displayed image point store (E1), which holds the whole image information in the form of so-called pixels.

4. Method according to claims 1 and 3, characterized in that the data which lead to the overlaying of the sections ($Y_0$, $F_0$ to $Y_n$, $F_n$) of the workpiece (W) and tool (F) are supplied by a digital computer.

5. Method according to claim 1, characterized in that the resultant workpiece contours (Ar) are generated by a simple algorithm which evaluates the image information in the image point store (E1) directly for this.

6. Method according to claim 1, characterized in that oblique workpiece contours can also be represented.

## Revendications

1. Procédé pour la représentation en perspective d'une pièce susceptible de changer, travaillée par un outil, à l'aide de tranches de la pièce à travailler et de l'outil se développant dans la même direction, de préférence pour la représentation sur écran d'une commande de machine-outil, caractérisé en ce que la pièce à travailler (W) est décomposée en un certain nombre de tranches ($Y_0$ à $Y_n$) dont les coordonnées sont mémorisées dans une mémoire de tranches (M) pour les tranches de la pièce à travailler, en ce que l'outil (F) agissant sur la pièce à travailler (W) est également décomposé en des tranches ($F_0$ à $F_n$) dont les coordonnées sont mémorisées dans une mémoire de tranches (M') pour les tranches de l'outil, en ce qu'ensuite les tranches ($Y_0$ à $Y_n$) de la pièce à travailler (W) et les tranches ($F_0$ à $F_n$) de l'outil sont superposées successivement dans une mémoire (E1) de points d'image non indiquée en fonction des données déterminant leurs mouvements relatifs, en ce que des contours de la pièce à travailler en résultant sont établis à partir des tranches respectives superposées ($Y_0$, $F_0$ à $Y_n$, $F_n$), en tant que nouvelles tranches ($Y_0'$ à $Y_n'$) de la pièce à travailler modifiée (W') et sont mémorisés dans la mémoire de tranches (M) pour les tranches de la pièce à usiner, en ce que les

nouvelles tranches ($Y_0'$ à $Y_n'$) sont superposées, décalées l'une après l'autre à chaque fois de quelques points d'image l'une par rapport à l'autre dans la direction X et/ou Z des plans de coupe respectifs, dans la mémoire de points d'image (E1) dans un but de représentation en perspective, en ce que finalement, après chaque superposition des nouvelles tranches individuelles ($Y_0'$ à $Y_n'$), un contour extérieur résultant (AR) est déterminé, la détermination des contours extérieurs résultants (AR) ayant lieu dans la mémoire de points d'image (E1) non indiquée, conformément à un algorithme de contour rangé dans une mémoire (MA) et en ce que leurs données sont transmises à une mémoire de points d'image (E2) fonctionnant comme mémoire de répétition d'image et de là sont conduites à l'indication.

2. Procédé selon la revendication 1, caractérisé en ce que la mémorisation des coordonnées de tranches de la pièce à travailler (W, W') et de l'outil (F) a lieu sous une forme par incréments, dans une mémoire de tranches (M, M') RAM.

3. Procédé selon la revendication 1, caractérisé en ce que la superposition des tranches ($Y_0$, $F_0$ à $Y_n$, $F_n$) de la pièce à travailler (W) et de l'outil (F) a lieu dans une mémoire de points d'image (E1) non indiquée, qui contient toutes les informations d'image sous la forme de ce que l'on appelle des pixels.

4. Procédé selon la revendication 1 ou 3, caractérisé en ce que les données conduisant à la superposition des tranches ($Y_0$, $F_0$ à $Y_n$, $F_n$) de la pièce à travailler (W) et de l'outil (F) sont fournies par un calculateur numérique.

5. Procédé selon la revendication 1, caractérisé en ce que les contours résultants (Ar) de la pièce à travailler sont déterminés au moyen d'un algorithme simple qui exploite directement dans ce but les informations d'image se trouvant dans la mémoire de points d'image (E1).

6. Procédé selon la revendication 1, caractérisé en ce que les contours d'objets à travailler obliques peuvent aussi être représentés.

*Fig.1*

*Fig.2*

Fig.3a

Fig.3b

Fig.3c

Fig.3d

Fig.3e

Fig.3

Fig.5a
Fig.5
Fig.5b
Fig.5c

Fig.4.a
Fig.4.
Fig.4.b
Fig.4.c

SUBROUTINE (XS,ZS,DX,DZ)

X=XS ; Z=ZS

X=X+DX ; Z=Z+DZ

PIXEL(X,Z)=1?

JA

NEIN

X=X-DX ; Z=Z-DZ

DX=DZ ; DZ=DX

X=X+DX; Z=Z+DZ

PIXEL(X,Z)=1?

JA

NEIN

X=X-DX ; Z=Z-DZ

SPEICHERE X,Z

X=XS & Z=ZS?

JA

NEIN

DX=DZ ; DZ=-DX

X=X+DX; Z=Z+DZ

DX=-DZ ; DZ=DX

X=X-DX ; Z=Z-DZ

SPEICHERE X,Z

X=XS & Z=ZS?

JA

NEIN

RETURN

*Fig.6*

4

Fig. 7

Fig.8

Fig.9